# FASCICULE DE BREVET EUROPEEN

(11) **EP 4 561 867 B1**
(45) Date de publication et mention de la délivrance du brevet: **27.05.2026**
(21) Numéro de dépôt: 23748282.3
(22) Date de dépôt: 23.06.2023
(51) Int. Cl.: B60R 13/00, B60R 11/04, B60R 19/52

(54) **DISPOSITIF DE SUPPORT MULTIFONCTION POUR CALANDRE DE VÉHICULE**
MEHRZWECKSTÜTZVORRICHTUNG FÜR EIN FAHRZEUGGITTER
MULTIPURPOSE SUPPORT DEVICE FOR VEHICLE GRILLE

(30) Priorité: 29.07.2022 FR 2207839
(43) Date de publication de la demande: 04.06.2025
(73) Titulaire: Stellantis Auto SAS, 78300 Poissy (FR)
(72) Inventeur: PERON, Rodolphe, 95220 Herbley sur Seine (FR); BOUDAN, Julien, 91210 Draveil (FR); ROYER, Guillaume, 91680 Bruyeres le Chatel (FR)
(74) Mandataire: BCIP
(86) Numéro de dépôt international: PCT/FR2023/050952
(87) Numéro de publication internationale: WO 2024/023415

(56) Documents cités:
- FR-A1- 3 106 095
- JP-A- 2009 083 720
- US-A1- 2013 107 046

## Description

Le domaine technique concerne les dispositifs de fixation de caméras d'assistance à la conduite, les calandres équipées d'un tel dispositif de fixation et les véhicules présentant une telle calandre.

Les clients des constructeurs d'automobiles sont très sensibles aux équipements des véhicules en termes d'assistance à la conduite ainsi qu'aux finitions des véhicules, ce qui comprend entre autres l'ajustement des assemblages des différents éléments des véhicules. Les véhicules automobiles offrent toujours plus d'aides à la conduite qui nécessitent l'installation de nombreux systèmes, tels que des capteurs ou des caméras sur le véhicule pour observer l'environnement du véhicule. Il n'est donc pas rare qu'une calandre d'un véhicule soit équipée de plusieurs caméras telles qu'une caméra d'assistance au stationnement, fournissant une vision de l'environnement immédiat devant le véhicule lorsque le conducteur effectue une manœuvre de stationnement, ou encore une caméra de vision nocturne permettant au conducteur d'obtenir une image de la route située à quelques dizaines ou centaines de mètres devant le véhicule en situation de conduite de nuit, grâce à un capteur infrarouge.

Par ailleurs, la calandre su véhicule comprend habituellement un logo représentant la marque du constructeur.

Les ajustements des pièces et divers éléments sur la calandre doivent être très minutieux car ils sont responsables de l'image extérieure du véhicule telle qu'elle est perçue par les clients et les usagers de la route.

Avec le nombre croissant d'éléments à fixer sur la calandre, le temps nécessaire au montage de la calandre est toujours plus important, surtout lorsqu'il s'agit de mettre en place et d'aligner correctement des caméras. Le document JP 2009 083720 A divulgue un dispositif de fixation d'une caméra et d'un emblème. Le document FR 3 106 095 A1 divulgue un dispositif de fixation de deux caméras.

Ainsi, il existe un besoin de simplifier l'assemblage d'éléments sur une calandre, notamment le positionnement de caméras d'aide à la conduite. La solution doit en outre permettre d'obtenir des ajustements corrects des éléments sur la calandre.

A cet effet, la présente invention se rapporte à un dispositif de fixation d'accessoires sur une calandre d'un véhicule automobile, le dispositif comportant les caractéristiques de la revendication 1.

L'invention concerne également une calandre d'un véhicule automobile comprenant une grille de calandre et un ensemble selon l'invention fixé sur la grille de calandre.

L'invention concerne enfin un véhicule automobile comprenant une calandre selon l'invention.

Ainsi, le dispositif de fixation permet de monter deux caméras d'assistance à la conduite et un emblème du constructeur sur le dispositif selon l'invention pour former un ensemble selon l'invention, avant le montage de cet ensemble sur la calandre. Les alignements des caméras sont assurés par le dispositif, de même que le positionnement correct de l'emblème. De l'extérieur du véhicule, un observateur regardant la calandre, ne voit pas les caméras mais seulement leur objectifs, installés derrière les ouvertures et l'emblème. Grâce à la platine monobloc, les positionnements relatifs des ouvertures et de l'emblème sont toujours corrects. Enfin, l'assemblage de l'ensemble selon l'invention est plus facile que lorsque chaque accessoire doit être installé sur la grille de calandre séparément. Après installation des accessoires sur le dispositif selon l'invention, l'ensemble est facilement fixé sur une grille de calandre, offrant ainsi un gain de temps de montage des accessoires.

Selon un mode de réalisation de l'invention, le dispositif comporte des moyens de fixation du dispositif sur la calandre, notamment une plaque de fixation conformée pour prendre en sandwich la calandre avec la face arrière de la platine.

Selon une possibilité du dispositif, il comporte un capot arrière conçu pour être fixé sur la face arrière de la platine, le capot arrière définissant avec la face arrière au moins un logement dimensionné pour accueillir au moins une des caméras d'assistance à la conduite.

Selon un mode de réalisation, la zone de réception de la face avant comporte des orifices de centrage, chacun destiné à accueillir un pion de centrage faisant saillie de l'emblème et/ou des fentes de clippage pour permettre le clippage de l'emblème.

Selon l'invention, au moins une ouverture est entourée d'un rebord tronconique faisant saillie de la face arrière de la platine et s'étendant entre la platine et une extrémité arrière, l'extrémité arrière étant conçue pour accueillir l'objectif d'une des caméras.

Selon une possibilité, l'ensemble comprend une caméra d'assistance au stationnement et une caméra de vision nocturne montées sur la face arrière. Selon un mode de réalisation de la calandre, la grille de calandre est constituée de deux parties assemblables l'une à l'autre, l'ensemble permettant de maintenir assemblées les deux parties.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective de la face arrière d'un dispositif de fixation selon l'invention ;
[Fig. 2] la figure 2, représente une vue en perspective de la face avant d'un dispositif selon l'invention, ainsi qu'un emblème, une caméra et un capot arrière ;
[Fig. 3] la figure 3, représente une vue en perspective d'un ensemble selon l'invention avant sa fixation sur une grille de calandre.

Dans ces figures, les mêmes références sont utilisées pour désigner les mêmes éléments.

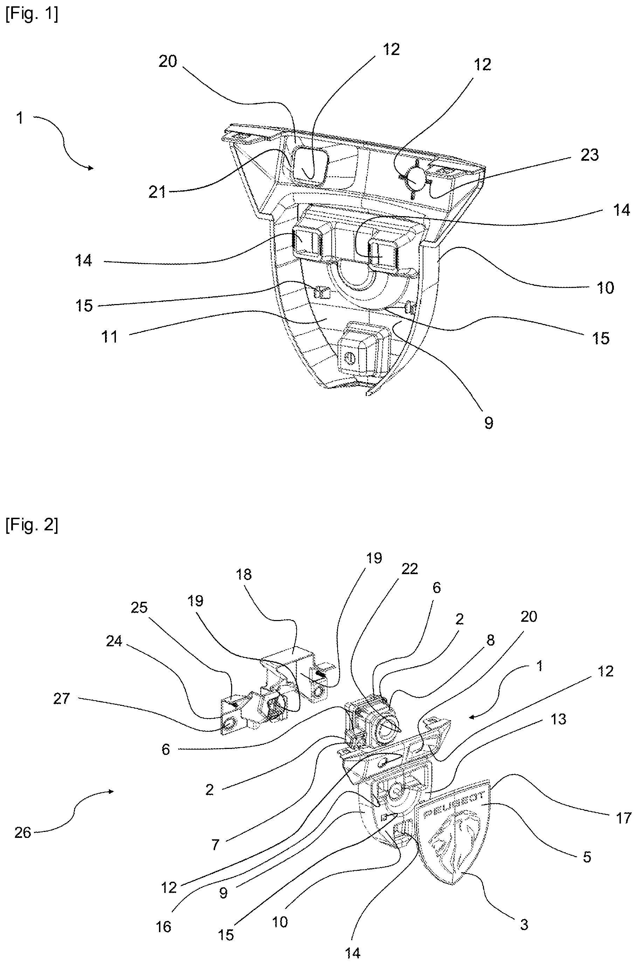

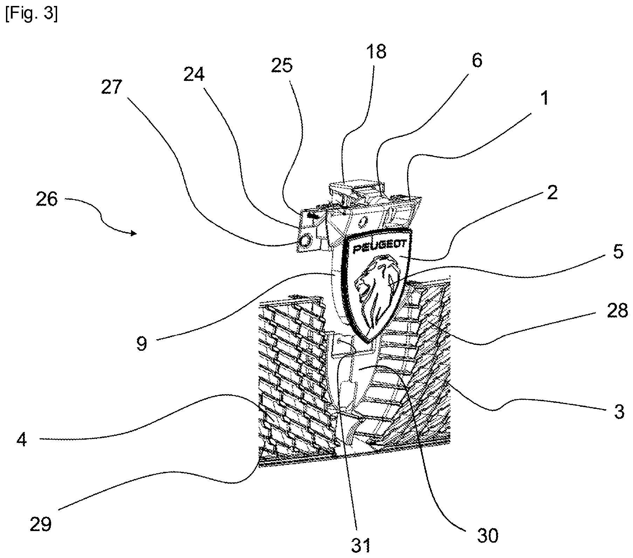

Un dispositif 1 de fixation selon l'invention, illustré sur les figures 1 et 2, permet de fixer des accessoires 2, illustrés sur la figure 2, sur une calandre 3 d'un véhicule automobile, notamment sur une grille 4 de calandre, illustrée sur la figure 3. Les accessoires 2 sont au moins un emblème 5 et deux caméras 6 d'assistance à la conduite, notamment une caméra d'assistance au stationnement 7, conçue pour fournir une image au conducteur de l'environnement du véhicule lors du stationnement du véhicule, et une caméra de vision nocturne 8, capable de fournir une infra-rouge de l'environnement du véhicule. L'emblème 5 est, par exemple, obtenue par moulage d'une matière plastique et présente une surface figurant l'emblème du constructeur du véhicule automobile.

Le dispositif 1 présente une platine 9 s'étendant entre une face avant 10 et une face arrière 11. Le dispositif 1 de fixation est avantageusement réalisé en matière plastique moulée.

La platine 9 présente au moins deux ouvertures 12 traversant les faces avant 10 et arrière 11, chacune conformée pour permettre le montage d'une caméra 6 sur la face arrière 11 de la platine 9 pour observer l'environnement du véhicule à travers l'ouverture 12. En outre, la face avant 10 de la platine 9 présente une zone de réception 13 conçue pour recevoir et fixer l'emblème 5. A cet effet, la zone de réception 13 de la face avant 10 comporte des orifices de centrage 14, visibles sur la la figure 1, chacun destiné à accueillir un pion de centrage, non illustré sur les figures, faisant saillie de l'emblème 5 et/ou des fentes de clippage 15 pour permettre le clippage de l'emblème 5. Afin de réaliser un clippage de l'emblème 5, ce dernier présente des languettes de clippage, non illustrés, conformés pour interagir avec les fentes de clippage 15. La zone de réception 13 comporte, par exemple, un rebord 16 conformé pour épouser le contour 17 de l'emblème 5 lorsque celui-ci est fixé dans la zone de réception 13.

Le dispositif 1 comporte en outre un capot arrière 18, illustré sur la figure 2, conçu pour être fixé sur la face arrière 11 du dispositif 1. Ainsi fixé, le capot arrière 18 définit avec la face arrière 11 au moins un logement 19, en l'occurrence deux logements 19, chacun dimensionné pour accueillir au moins une des caméras 6 d'assistance à la conduite.

Selon le mode de réalisation illustré sur les figures, qui correspond à l'invention, au moins une ouverture 12 est entourée d'un rebord 20 tronconique faisant saillie de la face arrière 11 de la platine 9 et s'étendant entre la platine 9 et une extrémité arrière 21. L'extrémité arrière 21 est conçue pour accueillir l'objectif 22 d'une des caméras 6, en l'occurrence de la caméra de vision nocturne 8. Dans l'exemple illustré sur les figures, l'autre ouverture 12 est alors conformée pour recevoir la caméra d'assistance au stationnement 7 et présente à cet effet des encoches 23, visibles sur la figure 1, permettant d'orienter ladite caméra d'assistance au stationnement 7.

Comme illustré sur la figure 3, la platine 9 comporte des moyens de fixation 24 du dispositif 1 sur la calandre 3, notamment une plaque de fixation 25 conformée pour prendre en sandwich la calandre 3 avec la face arrière 11 de la platine 9. La plaque de fixation 25 vient, par exemple, de matière avec le capot arrière 18.

Le dispositif 1 selon l'invention permet de réaliser un ensemble 26 selon l'invention, illustré sur la figure 3, comportant au moins une caméra 6 d'assistance à la conduite, chaque caméra 6 étant montée sur la face arrière 11 du dispositif 1 de sorte à observer l'environnement du dispositif à travers une des ouvertures 12 du dispositif 1. L'ensemble 26 comporte en outre l'emblème 5 fixé dans la zone de réception 13 de la face avant 10.

Dans l'exemple illustré sur les figures, l'ensemble 26 présente ainsi la caméra d'assistance au stationnement 7 et la caméra de vision nocturne 8.

La calandre 3 selon l'invention comprend donc la grille 4 de calandre et l'ensemble 26 fixé sur ladite grille 4. La fixation de l'ensemble 26 est effectuée grâce aux moyens de fixation 24 qui comprennent, par exemple, des trous de vissage 27 permettant de visser l'ensemble 26 sur la grille 4.

Dans l'exemple illustré sur la figure 3, la grille 4 de calandre est constituée de deux parties 28, 29 assemblables l'une à l'autre, l'ensemble 26 permettant de maintenir assemblées les deux parties 28, 29. Afin de recevoir l'ensemble 26, la grille 4 présente une zone de fixation 30 conformée pour être prise en sandwich entre la plaque de fixation 25 et la platine 9. La zone de fixation 30 comporte des orifices de vissage 31 conformés pour être alignés avec les trous de vissage 27 lorsque l'ensemble 26 est mis en place sur la grille 4 de calandre.

Ainsi, le dispositif 1 de fixation permet de fixer les accessoires 2 facilement, avant l'installation de l'ensemble 26 sur la grille 4 de calandre, offrant un gain de temps non négligeable pour le montage de la calandre 3 selon l'invention. Les alignements des accessoires 2 perçus par l'observateur de la calandre 3 sont toujours parfaits puisqu'ils sont réalisés par les positions relatives des ouvertures 12 et de la zone de réception 13.

L'invention ne se limite pas au mode de réalisation du dispositif de fixation décrit ci-avant, seulement à titre d'exemple, mais d'autres modes de réalisation peuvent être conçus par l'homme de métier sans sortir du cadre et de la portée de la présente invention.

## Revendications

1. Dispositif (1) de fixation d'accessoires (2) sur une calandre (3) d'un véhicule automobile, le dispositif (1) étant conçu pour fixer au moins deux caméras (6) d'assistance à la conduite et un emblème (5), le dispositif (1) présentant une platine (9) s'étendant entre une face avant (10) et une face arrière (11), la platine (9) présentant au moins deux ouvertures (12), chacune conformée pour permettre le montage d'une caméra (6) sur la face arrière (11) de la platine (9) pour observer l'environnement du véhicule à travers l'ouverture (12), la face avant (10) de la platine (9) présentant une zone de réception (13) conçue pour recevoir et fixer l'emblème (5), **caractérisé en ce que** au moins une ouverture (12) est entourée d'un rebord (20) tronconique faisant saillie de la face arrière (11) de la platine (9) et s'étendant entre la platine (9) et une extrémité arrière (21), l'extrémité arrière (21) étant conçue pour accueillir l'objectif (22) d'une des caméras (6).

2. Dispositif (1) selon la revendication 1, **caractérisé en ce que** le dispositif (9) comporte des moyens de fixation (24) du dispositif (1) sur la calandre (3), notamment une plaque de fixation (25) conformée pour prendre en sandwich la calandre (3) avec la face arrière (11) de la platine (9).

3. Dispositif (1) selon la revendication 1 ou 2, **caractérisé en ce qu'**il comporte un capot arrière (18) conçu pour être fixé sur la face arrière (11) de la platine (9), le capot arrière (18) définissant avec la face arrière (11) au moins un logement (19) dimensionné pour accueillir au moins une des caméras (6) d'assistance à la conduite.

4. Dispositif (1) selon l'une des revendications 1 à 3, **caractérisé en ce que** la zone de réception (13) de la face avant (10) comporte des orifices de centrage (14), chacun destiné à accueillir un pion de centrage faisant saillie de l'emblème (5) et/ou des fentes de clippage (15) pour permettre le clippage de l'emblème (5).

5. Ensemble (26) comprenant un dispositif (1) selon l'une des revendications 1 à 4, comportant au moins une caméra (6) d'assistance à la conduite, chaque caméra (6) étant montée sur la face arrière (11) du dispositif (1) de sorte à observer l'environnement du véhicule à travers une des ouvertures (12) du dispositif (1).

6. Ensemble (26) selon la revendication 5, **caractérisé en ce qu'**il comprend une caméra d'assistance au stationnement (7) et une caméra de vision nocturne (8) montées sur la face arrière (11).

7. Calandre (3) d'un véhicule automobile comprenant une grille (4) de calandre et un ensemble (26) selon la revendication 5 ou 6 fixé sur la grille (4) de calandre.

8. Calandre (3) selon la revendication 7, **caractérisée en ce que** la grille (4) de calandre est constituée de deux parties (28, 29) assemblables l'une à l'autre, l'ensemble (26) permettant de maintenir assemblées les deux parties (28, 29).

9. Véhicule automobile comprenant une calandre (3) selon la revendication 7 ou 8.

## Patentansprüche

1. Vorrichtung (1) zur Befestigung von Zubehörteilen (2) an einem Kühlergrill (3) eines Kraftfahrzeugs, wobei die Vorrichtung (1) zur Befestigung von mindestens zwei Fahrerassistenzkameras (6) und einem Emblem (5) ausgebildet ist, wobei die Vorrichtung (1) eine Platte (9) aufweist, die sich zwischen einer Vorderseite (10) und einer Rückseite (11) erstreckt, wobei die Platte (9) mindestens zwei Öffnungen (12) aufweist, die jeweils zur Befestigung einer Kamera (6) an der Rückseite (11) der Platte (9) ausgebildet sind, um die Umgebung des Fahrzeugs durch zu beobachten Die Öffnung (12), wobei die Vorderseite (10) der Platine (9) einen Aufnahmebereich (13) aufweist, der zur Aufnahme und Befestigung des Emblems (5) ausgebildet ist, **dadurch gekennzeichnet, dass** mindestens eine Öffnung (12) von einem kegelstumpfförmigen Flansch (20) umgeben ist, der von der Rückseite (11) der Platine (9) vorsteht und sich zwischen der Platine (9) und einem hinteren Ende (21) erstreckt, wobei das hintere Ende (21) zur Aufnahme des Objektivs (22) einer der Kameras (6) ausgebildet ist.

2. Vorrichtung (1) nach Anspruch 1, **dadurch gekennzeichnet, dass** die Vorrichtung (9) Befestigungsmittel (24) der Vorrichtung (1) an dem Kalander (3), insbesondere eine Befestigungsplatte (25) aufweist, die so ausgebildet ist, dass sie den Kalander (3) mit der Rückseite (11) der Platine (9) sandwichartig verbindet.

3. Vorrichtung (1) nach Anspruch 1 oder 2, **dadurch gekennzeichnet, dass** sie eine hintere Abdeckung (18) aufweist, die zur Befestigung an der Rückseite (11) der Platine (9) ausgebildet ist, wobei die hintere Abdeckung (18) mit der Rückseite (11) wenigstens eine Aufnahme (19) definiert, die so dimensioniert ist, dass sie wenigstens eine der Fahrerassistenzkameras (6) aufnimmt.

4. Vorrichtung (1) nach einem der Ansprüche 1 bis 3, **dadurch gekennzeichnet, dass** der Aufnahmebereich (13) der Vorderseite (10) Zentrieröffnungen (14) aufweist, von denen jede dazu bestimmt ist, einen vom Emblem (5) vorstehenden Zentrierstift und/oder Klipspalten (15) aufzunehmen, um das Einklipsen des Emblems (5) zu ermöglichen.

5. Anordnung (26) mit einer Vorrichtung (1) nach einem der Ansprüche 1 bis 4 mit mindestens einer Fahrerassistenzkamera (6), wobei jede Kamera (6) an der Rückseite (11) der Vorrichtung (1) angebracht ist, um die Umgebung des Fahrzeugs durch eine der Öffnungen (12) der Vorrichtung (1) zu beobachten.

6. Anordnung (26) nach Anspruch 5, **dadurch gekennzeichnet, dass** sie eine Einparkhilfe-Kamera (7) und eine Nachtsichtkamera (8) aufweist, die auf der Rückseite (11) angebracht sind.

7. Kalander (3) eines Kraftfahrzeugs, umfassend ein Kalandergitter (4) und eine Anordnung (26) nach Anspruch 5 oder 6, die an dem Kalandergitter (4) befestigt ist.

8. Kalander (3) nach Anspruch 7, **dadurch gekennzeichnet, dass** das Kalandergitter (4) aus zwei miteinander verbindbaren Teilen (28, 29) besteht, wobei die Einheit (26) es ermöglicht, die beiden Teile (28, 29) zusammenzuhalten.

9. Kraftfahrzeug mit einem Kalander (3) nach Anspruch 7 oder 8.

## Claims

1. Device (1) for attaching accessories (2) to a grille (3) of a motor vehicle, the device (1) being designed to attach at least two driving assistance cameras (6) and an emblem (5), the device (1) having a plate (9) extending between a front face (10) and a rear face (11), the plate (9) having at least two openings (12), each shaped to allow the assembly line of a camera (6) on the rear face (11) of the plate (9) to observe the environment of the vehicle through the opening (12), the front face (10) of the plate (9) having a goods in zone (13) designed to receive and attach the emblem (5), wherein at least one opening (12) is surrounded by a rim (20) frustoconical projecting from the rear face (11) of the plate (9) and extending between the plate (9) and a rear end (21), the rear end (21) being designed to receive the lens (22) of one of the cameras (6).

2. Device (1) according to claim 1, wherein the device (9) comprises means (24) for fixing the device (1) to the calender (3), in particular a fixing plate (25) shaped to sandwich the calender (3) with the rear face (11) of the plate (9).

3. Device (1) according to Claim 1 or 2, **characterised in that** it comprises a rear cover (18) designed to be fixed to the rear face (11) of the plate (9), the rear cover (18) defining with the rear face (11) at least one housing (19) dimensioned to accommodate at least one of the driving assistance cameras (6).

4. Device (1) according to one of Claims 1 to 3, **characterised in that** the goods in zone (13) of the front face (10) comprises centring orifices (14), each intended to receive a centring pin projecting from the emblem (5) and/or clipping slots (15) to allow the clipping of the emblem (5).

5. Assembly (26) comprising a device (1) according to one of claims 1 to 4, comprising at least one driving assistance camera (6), each camera (6) being mounted on the rear face (11) of the device (1) so as to observe the environment of the vehicle through one of the openings (12) of the device (1).

6. Assembly (26) according to claim 5, wherein it comprises a parking assistance camera (7) and a night vision camera (8) mounted on the rear face (11).

7. Grille (3) of a motor vehicle comprising a grill (4) and an assembly (26) according to Claim 5 or 6 fixed to the grill (4) of the grill.

8. Grille (3) according to claim 7, **characterised in that** the grill (4) of the grill consists of two parts (28, 29) which can be assembled together, the assembly (26) making it possible to keep the two parts (28, 29) assembled.

9. Motor vehicle comprising a grille (3) according to Claim 7 or 8.
